# EUROPEAN PATENT SPECIFICATION

(11) **EP 1 775 267 B1**
(45) Date of publication and mention of the grant of the patent: **22.12.2010**
(21) Application number: 06425045.9
(22) Date of filing: 30.01.2006
(51) Int. Cl.: B09C 1/02

(54) **Plant and process for the recycling of sweepings, water purifier wastes and the like**
Einrichtung und Verfahren zur Wiederverwertung von Kehrgut, Abfällen aus Wasserreinigungsgeräten und dergleichen
Installation et procédé pour le recyclage de balayures, déchets des purificateurs d'eau et similaires

(30) Priority: 23.06.2005 IT MI20051187
(43) Date of publication of application: 18.04.2007
(73) Proprietor: Ecocentro Tecnologie Ambientali s.r.l., 24020 Gorle (BG) (IT)
(72) Inventor: Esposito, Ezio, 24020 Gorle BG (IT)
(74) Representative: Concone, Emanuele

(56) References cited:
- EP-A- 0 325 159
- EP-A- 0 684 088
- DE-A1- 3 908 185
- DE-A1- 4 034 227
- DE-A1- 4 326 200
- DE-A1- 19 621 892
- FR-A- 2 790 979
- US-A- 4 879 048
- US-A- 5 540 270
- US-A- 5 599 372
- US-A- 6 007 618
- US-A1- 2004 082 828

## Description

The present invention relates to a plant and process for the recycling of wastes, and in particular for the recycling of sweepings and sand of the sand traps of water purifiers, i.e. wastes with high concentrations of organic material, and also for the wash and recovery of materials from excavations or bonifications of polluted soils and the like.

Presently, most of the sweepings and sands from water purifiers are disposed of in controlled landfills without any recovery of materials. In the case of environmental bonifications, the materials may be contaminated by multiple substances among which organic and inorganic pollutants that usually have a toxic, mutagenic and/or cancerous action on living beings, thus resulting particularly dangerous.

To treat these wastes there are presently available only plants that treat sweepings and have various limitations, for example they do not allow the recovery of material differentiated by grain size that can meet the requirements of standards UNI-EN 12620, 13043, 13139, 13242. Moreover, said plants are not suitable to recover materials containing pollutants in such concentrations as to meet the requirements of the release test provided in annex 3 of the Ministerial Decree dated 5 February 1998 and according to the characteristics of the above-mentioned UNI-EN standards.

The applicant is aware of the following types of plants that have these drawbacks:
- the plants of HANS HUBER AG (Germany) or of LADURNER (Lana, Bolzano), that produce recovered materials not differentiated by grain size, with a content in organic substances ≤3%;
- the plants of REGIO RECYCLING (Switzerland), that produce recovered materials not differentiated by grain size, with a content in organic substances of about 2%;
- the plants of AKW (Germany), that produce recovered materials differentiated by grain size yet with a content in organic substances of the recovered materials higher than the plant of the present invention.

Other examples of plants having a general structure similar to the structure of the present plant can be found in the following patent publications: DE 4034227, EP 0325159, DE 3908185, FR 2790979, US 5540270, US 2004/082828, DE 19621892, EP 0684088, US 4879048, US 5599372, DE 4326200 and US 6007618. The document DE-A1-4034227(D1) discloses a plant in accordance with the the preamble of claim 1 and a process in accordance with the preamble of claim 15.

Therefore the object of the present invention is to provide a recycling plant and process which are free from said drawbacks. This object is achieved by means of a plant and process whose main characteristics are disclosed in the independent claims, while other features are disclosed in the dependent claims.

A first important advantage of the plant according to the present invention is that it can treat all the above-mentioned types of wastes with recovery and reuse of the raw materials contained therein, while producing only a very small fraction of wastes to be disposed of in a controlled landfill and/or in thermal incinerators. This results in a significant advantage from the environmental point of view, in that reusable raw materials are recovered and controlled landfill volumes are saved.

A second significant advantage of this plant is that it allows also to achieve a net profit, in that not only reusable raw materials are recovered but also a portion of the wastes to be disposed of are anyway intended for recovery in furnaces and/or cement plants (sludge) or for composting (organic materials).

More specifically, through the present plant it is possible to recover materials to be used as secondary raw materials in buildings (concretes, cements, etc.), materials to be used for environmental restoring, landfill covers, road spreadings and for making road ramps and subgrades, materials for the brick and cement industry, ferrous materials, non ferrous materials, and materials intended for composting.

In particular, as far as the materials recovered to be used as secondary raw materials in buildings are concerned, the following materials are obtained:
- sand, with a grain size 0,063÷2 mm according to standard UNI-EN 12620, 13043, 13139, 13242;
- granule, with a grain size 2÷8 mm according to standard UNI-EN 12620, 13043, 13242;
- gravel, with a grain size 8÷30 mm according to standard UNI-EN 13242.

It should be noted that the grain sizes above are merely non-limiting examples in that, by properly changing the apertures in the screens, slightly different grain sizes may be obtained yet still in conformity to the above-mentioned UNI-EN standards. Furthermore, the sand, granule and gravel are practically free from organic material.

Still another advantage of the present plant is that it purifies in a physico-chemical treatment section the waste water resulting from the wash, with purification within the limits of table 3, annex 5 of the Legislative Decree No.152/99 and subsequent modifications and integrations for the discharge to the public sewer system. In this way, about 80% of the purified water is recirculated in the plant, thus dramatically reducing the water consumption for the operation of the plant, while about 20% is excess water that is discharged to the public sewer system.

Further advantages and characteristics of the recycling plant and process according to the present invention will be clear to those skilled in the art from the following detailed and non-limiting description of an embodiment thereof, with reference to the annexed drawings wherein:
Fig.1 shows a general block diagram of a plant according to the present invention;
Fig.2 shows in a diagrammatic way the portion of the plant relating to the loading of the wastes and to the initial wash and separation step of the latter;
Fig.3 shows in a diagrammatic way the portion of the plant relating to the distribution of some materials recovered after the initial separation step;
Fig.4 shows in a diagrammatic way the portion of the plant relating to the collection of the waste water resulting from the wash and the subsequent separation of the smallest particles of material;
Fig.5 shows in a diagrammatic way the portion of the plant relating to the physico-chemical treatment section;
Fig.6 shows in a diagrammatic way the portion of the plant relating to the storage and metering of the chemical reagents used in the plant;
Fig.7 shows in a diagrammatic way the portion of the plant relating to the mechanical dehydration of the sludge; and
Fig.8 shows in a diagrammatic way the portion of the plant relating to the collection and recirculation of the purified water and to the discharge of the excess water.

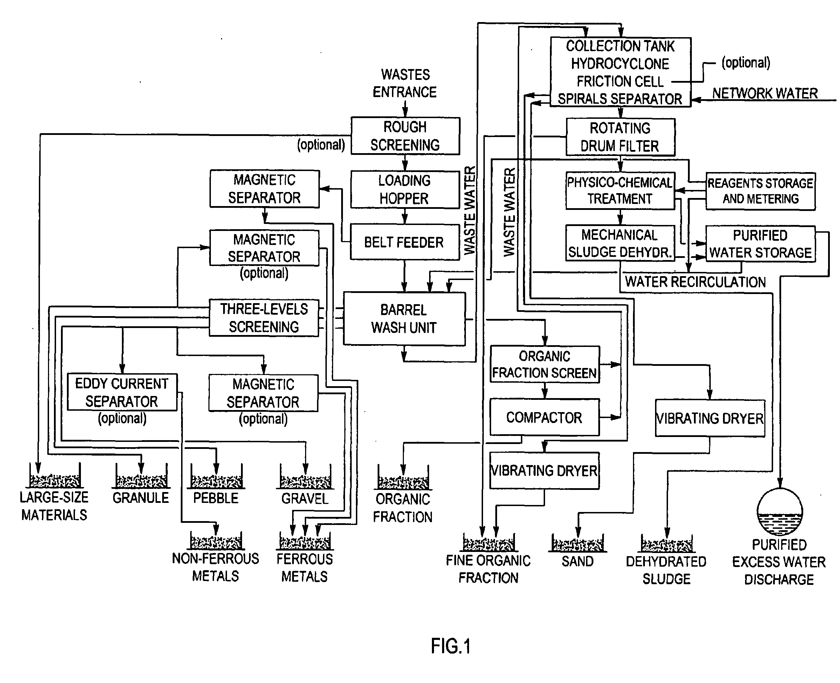

With reference to fig. there is seen that a recycling plant according to the present invention includes several components that interact in order to treat the wastes in a complete and safe way and to obtain from them all the possible recovery materials, as previously mentioned. Since the diagram of fig. 1 is self-explanatory, a description of the specific connections between the various components is superfluous, but it should be noted that not all components must necessarily be present.

In fact, some components are indicated as optional in that the plant is described in its most general arrangement, but each plant can be manufactured to treat only some types of wastes that do not require some components, which therefore can be omitted. For example, for recycling the sand coming from the sand trap of a water purifier there is no need of the initial rough screening.

The plant and process of the present invention, illustrated in this general diagram, allow to achieve the previously described quality results not achieved by other presently available plants, used only to wash sweepings, thanks to the use of:
- a barrel wash unit of the type disclosed in the Italian patent No. IT 1349786 in the name of the same applicant, to which reference is made for a more detailed description of the operation of this unit, that is very effective in separating organic materials such as leaves, plastic, paper, etc. from inorganic materials such as sand and gravel and in washing said organic materials;
- hydrocyclone and spirals separators-classifiers used only for the finest sand, with an enhanced effectiveness in the separation of the fine organic fraction;

- a custom-designed screw compactor capable of compacting the separated organic substances to a moisture degree ≤30% such that they can subsequently be used for composting;
- magnetic separators of ferrous materials both for the wastes entering the plant and for the washed granule and gravel;
- an eddy current separator to remove the non-ferrous (non-magnetic) materials from the gravel;
- a self-cleaning filter at the entrance to the physico-chemical treatment section that allows to remove about 90% of the organic substances contained in the waste water with significant advantages in terms of enhanced sludge settlability, reduction of the organic substances contained in the sludge (whereby the latter can be recovered in furnaces and/or cement plants) and recovery of organic substances that can be used for composting; and
- a physico-chemical treatment section for the waste water resulting from the wash, capable to purify the water to the extent that it can be discharged to the public sewer system and it can be recirculated to the washing process in an amount of about 80%.

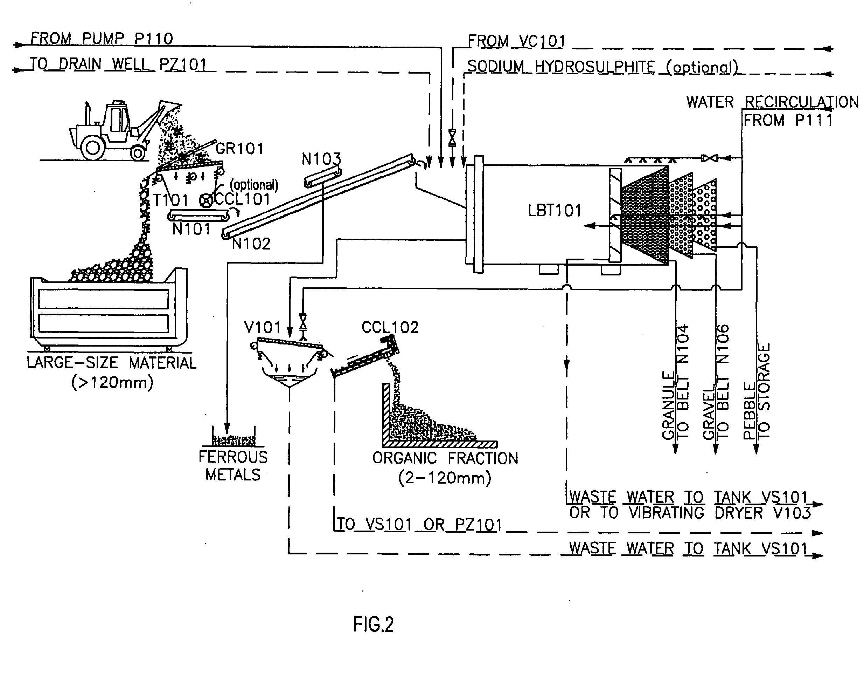

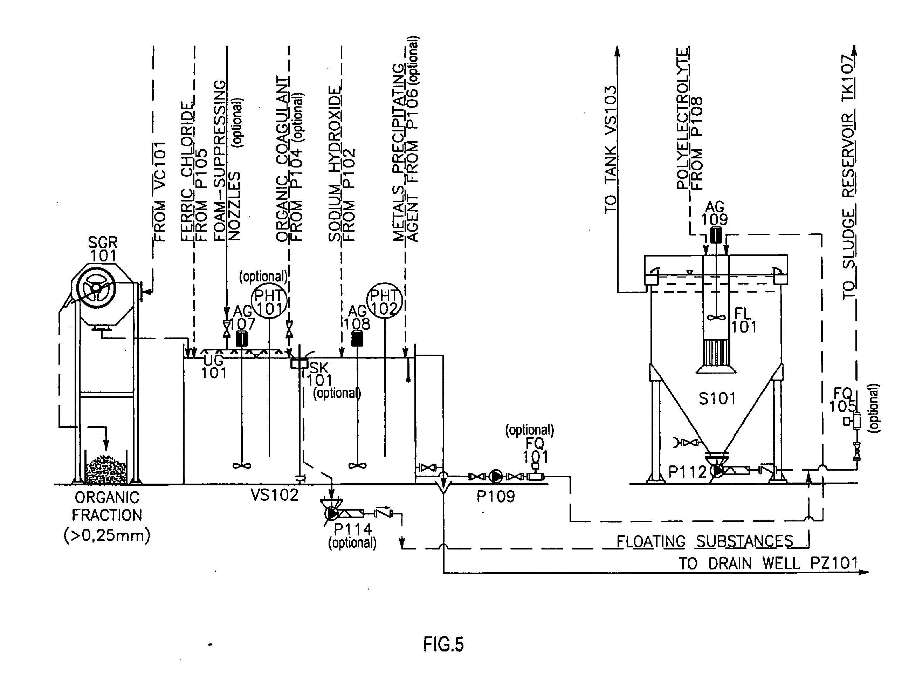

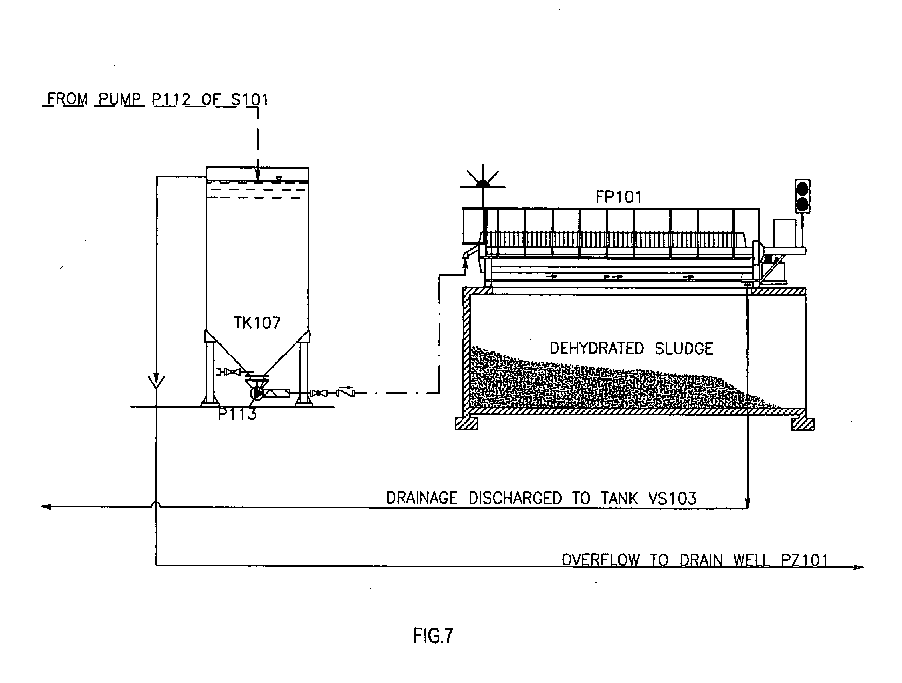

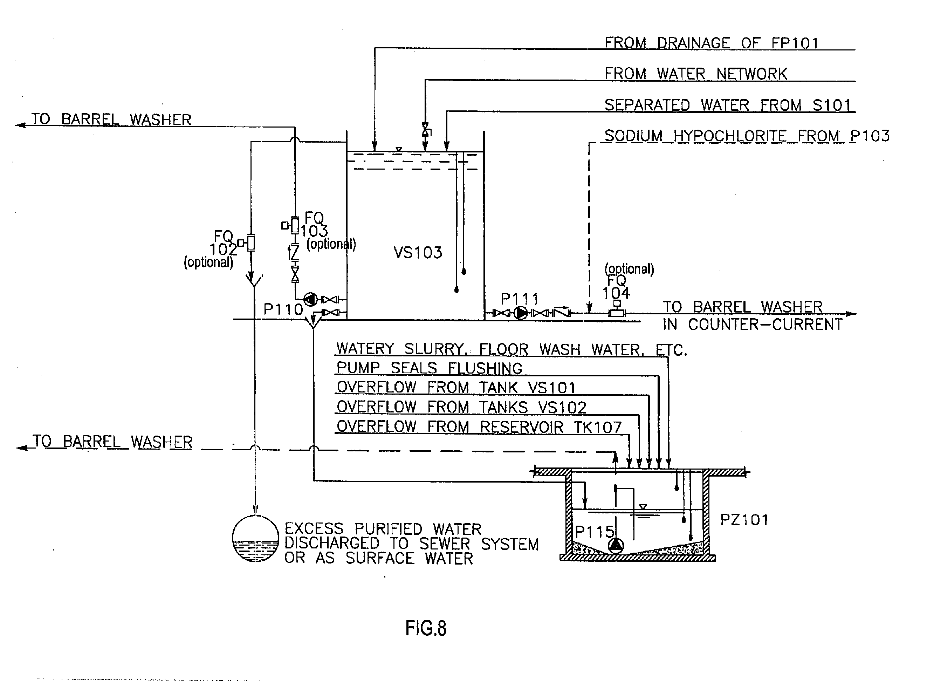

The recycling plant can be generally divided into the following four sections:
- wash of the materials and separation of the fractions (figs.2-4);
- physico-chemical treatment of the waste water (figs.5-6);
- mechanical dehydration of the sludge (fig.7); and
- collection and recirculation of the purified water, collection of overflows, slurry, etc. (fig.8).

Each of these sections will now be described in detail with reference to the relevant figures, that are already greatly explanatory. It should be noted that in said figures the flows between the various components of the plant are indicated as follows:
- flow of the water to be treated: dash line with long dashes;
- flow of the treated water: solid line;
- flow of the chemical reagents: dash line with short dashes;
- flow of the sludge: dot and dash line.

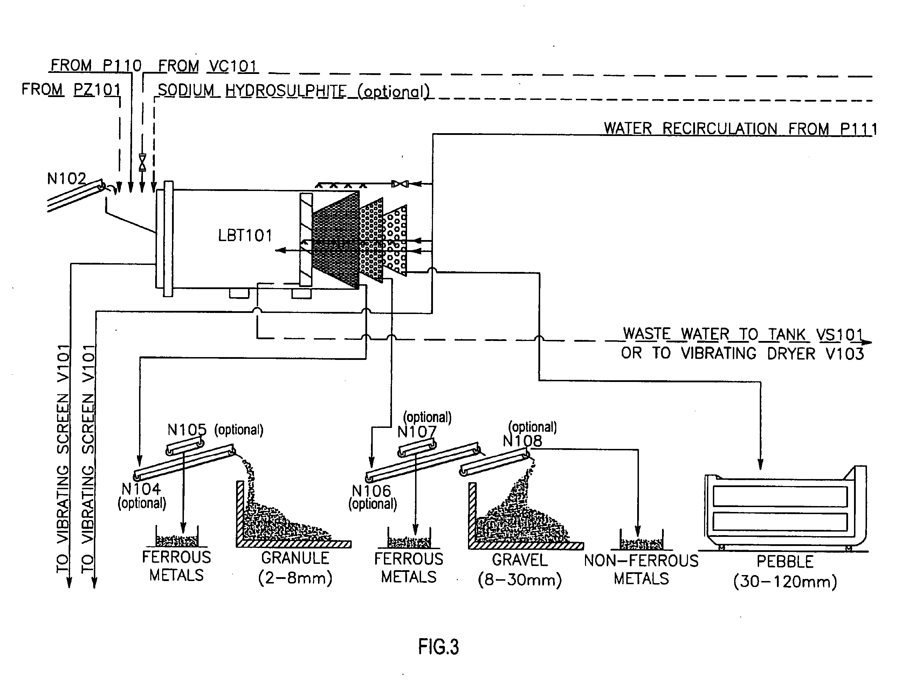

In the diagrams of figs.2 and 3 there is illustrated the portion of the plant where the wastes are loaded and the initial wash and separation of the larger materials and possible ferrous and non-ferrous metals takes place.

The wastes are preferably loaded on a protection screen GR101 serving the purpose of separating the materials of large size (≥120 mm) from the rest of the materials to be washed, in order to protect the machinery that carries out the washing. Said screen for the rough screening can be a simple stationary screen, with manual cleaning or cleaning by tipping over of the screen by means of a hydraulic cylinder so as to drop the large materials into a relevant container, or it can be a dynamic screen, i.e. a vibrating screen.

The materials with size <120 mm that pass through the rough screen GR101 fall into an underlying loading hopper T101, typically made of steel sheet and sections, that may be provided or not with vibrators to facilitate the outflow of the materials to be washed. Said loading hopper T101 has walls with an inclination lower than 15°, so as to prevent the possibility of formation of waste bridges that would hinder the smooth outflow and therefore the constant feeding of the plant.

The system for extracting the wastes from hopper T101 consists of a conveyor belt N101, for example with an effective width of about 800 mm, or of a pair of screws with a diameter of about 350 mm each resulting in a global width of about 700 mm. Anyway, the width of said conveying system is such as to prevent or reduce the risk of formation of waste bridges in the loading hopper.

The speed of the conveyor belt N101 or of the screws is adjustable by means of a frequency converter (inverter) or an electromechanical variator, so as to be able to adjust the flow rate fed to the wash plant. When the extraction of the wastes is performed through the conveyor belt N101, the outflow of the materials is preferably facilitated and adjusted also by a transverse screw CCL101 optionally arranged at the outlet of hopper T101.

The material coming from the conveyor belt N101 is picked up by a belt feeder N102 that transports the material to a barrel washer LBT101 of the type mentioned above. The width of said belt feeder N102 is obviously related to the capacity of the wash plant, while its speed is preferably fixed and such as to allow the feeding of the barrel washer LBT101 at its maximum hourly processing capacity.

Above the belt feeder N102 there is arranged a magnetic separator N103 for the separation and recovery of ferrous metals, that are picked up and discharged to a relevant container.

It should be noted that, same as in the system for extracting the wastes from hopper T101, the feeding by means of a screw or a pair of screws is an alternative to the feeding by means of belt N102.

The wash of the materials takes place in the barrel washer LBT101, inside which there is a turbulent mixing of the continuously loaded materials, that are washed with clean process water (coming from a storage tank of the recirculated water) that flows in counter-current inside the washer. Moreover, as shown in the figures, the barrel washer LBT101 also receives treated and untreated water coming from other portions of the plant, and possibly sodium hydrosulphite coming from the physico-chemical treatment section.

The barrel washer LBT101 substantially consists of a wash barrel inside which there are formed three screening zones by means of three frustoconical concentric screens connected to the wash barrel through flanges and screws, in addition to a bottom zone for the removal of inert material made up of coarse sand and gravel, and a head spillway for the outflow of the waste water containing the organic substances, fine sand and silt. These three frustoconical screens have screening surfaces with apertures of 2,5 mm, 8 mm and 30 mm in diameter respectively, so as to achieve the separation of silt/sand, granule, gravel and pebble.

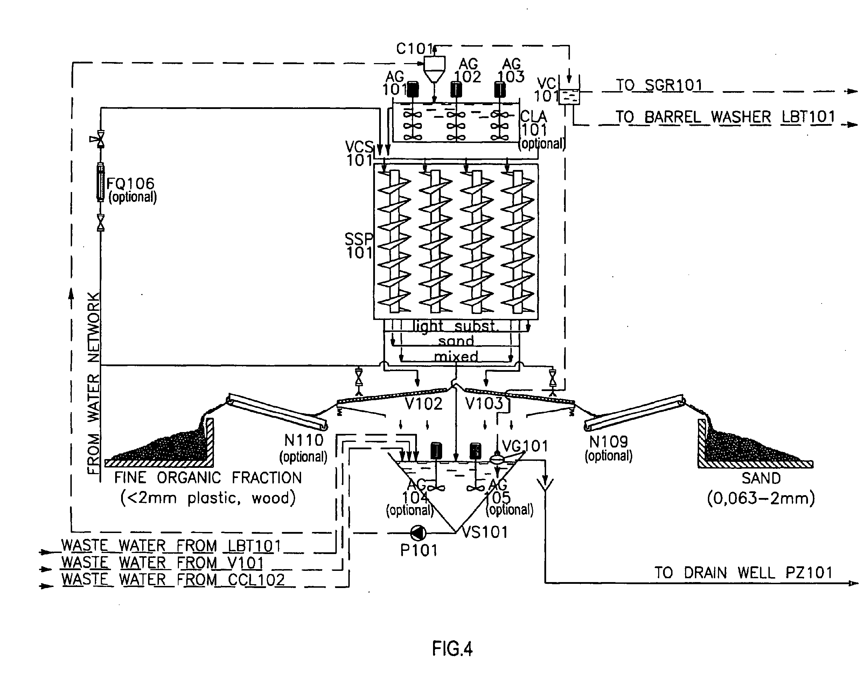

More specifically, the separations that take place in the barrel washer LBT101 are the following:
- the organic substances with size <120 mm, fine sand and silt flow out through the front of the washer and are conveyed to a vibrating screen V101;
- the zone with 2,5 mm apertures allows the passage of the waste water resulting from the wash that contains washed sand, silt and water; this waste water, through a gravity pipe, flows to a collection tank VS101 (fig.4), but in certain cases it could even flow directly to a vibrating dryer V103 (fig.4) if it contains practically only washed sand;
- the zone with 8 mm apertures allows the passage of granule with size 2-8 mm, that is further washed by nozzles fed with clean water and conveyed to a relevant storage container; along the path to the storage there may be provided a conveyor belt N104 above which there is arranged a magnetic separator N105 for the separation and recovery of ferrous metals 2-8 mm in size that have possibly escaped the magnetic separator N103, which are picked up and dropped into a relevant container;
- the zone with 30 mm apertures allows the passage of gravel with size 8-30 mm, that is further washed by nozzles fed with clean water and conveyed to a relevant storage container; along the path to the storage there may be provided a conveyor belt N106 above which there is arranged a magnetic separator N107 for the separation and recovery of ferrous metals 8-30 mm in size that have possibly escaped the magnetic separator N103, which are picked up and dropped into a relevant container. After the conveyor belt N106 there may also be provided an eddy current separator N108 for the separation and recovery of non-ferrous metals (e.g. aluminium, copper, brass, stainless steel) which are picked up and dropped into a relevant container; and
- the pebble 30-120 mm in size flows out from the bottom zone and is conveyed directly or through a conveyor belt (not shown) to a container.

It should be noted that the above-described screening can be achieved also through means different from the frustoconical screens integrated in the barrel washer LBT101, such as vibrating screens or the like. Furthermore, the wash and screening unit could feature even a lower number of screening zones, for example using only one or two screens.

As mentioned above, a pipe starts from the front portion of the wash unit and reaches a vibrating drainage screen V101, with a stainless steel net typically 2,5 x 2,5 mm in mesh size, but possibly of different size, suitable to perform the separation of the organic fraction >2 mm (wood, plastic, leaves, etc.) of the waste water that contains also silt and sand.

The waste water containing organic and inorganic material <2 mm in size flows by gravity, through a relevant pipe, to the above-mentioned waste water collection tank VS101.

The vibrating screen V101 is provided with nozzles that carry out a further wash of the organic material with clean process water. The screened material is then conveyed to a screw compactor CCL102 for the dehydration of the organic substances, that are further washed by nozzles arranged on the hopper of the compactor. This is a compactor capable of producing shredded organic material, with a moisture content ≤30%, that can be used for composting (the compactor may be of the screw type or of any other type). The waste water drained from this material is conveyed to the collection tank VS101, or directly to a drain well PZ101 (fig.7).

Referring now to fig.4, there is illustrated the portion of the wash and separation section relating to the collection of the waste water and to the separation of the smallest particles of material.

The collection tank VS101 is a storage tank that collects the waste water consisting of water, sand, silt and organic particles <2 mm, coming from the vibrating screen V101, compactor CCL102 and the barrel washer LBT101.

Tank VS101 is connected to a regulation tank VC101 that, together with a float valve VG101, provides to maintaining the minimum level sufficient for the operation of a pump P101 that draws the waste water and feeds a hydrocyclone/spirals group. Said tank VS101, generally having the shape of an inverted pyramid, is preferably made of steel coated with epoxide tar or coated anyway with abrasion-resistant materials.

One or more agitators AG104, AG105 with shaft and paddles coated with abrasion-resistant material may be arranged in the tank to prevent the sedimentation of the sand and to facilitate the wash by scrubbing of the particles.

A hydrocyclone C101 receives the waste water from tank VS101 and is used to separate the sand fraction, typically sized ≥0,063 mm but in certain applications possibly of smaller size, from the silt-containing waste water that, through the top nozzle of the hydrocyclone, is conveyed to the regulation tank VC101. From here, the waste water is partly conveyed to the physico-chemical treatment section and possibly partly returned to the barrel washer LBT101. Typically there is provided only one hydrocyclone, but also two or more hydrocyclones may be installed depending on the capacity of the plant and on the characteristics of the hydrocyclones.

In hydrocyclone C101 the sand particles are centrifuged and vigorously scrubbed, thus completing the washing action initiated in washer LBT101. The separated sand fraction (containing also organic material<2 mm) that flows out of the bottom nozzle of the hydrocyclone is conveyed to a spirals separator SSP101.

Between hydrocyclone C101 and separator SSP101 there may be inserted a friction cell CLA101, consisting of a tank internally coated with abrasion-resistant material, such as polyurethane or the like, and provided with some high-speed agitators AG101, AG102, AG103 with shaft and paddles coated with abrasion-resistant material.

The friction cell CLA101 is shaped so as to facilitate the encounters and collisions between the sand particles, and to achieve a contact time of the water/sand/organic particles mixture not shorter than 3 minutes. The purpose of the friction cell CLA101 is that of facilitating the wash and decontamination of the sand particles by mutual scrubbing of the latter.

The spirals separator SSP101 consists of a variable number of units depending on the capacity of the plant (four spirals in the illustrated example). At the top end of the separator there is arranged a load tank VCS101 for the apportionment of the feeding to the various spirals, in addition to the structure housing hydrocyclone C101 and the optional friction cell CLA101.

The mixed fraction of water, sand and fine organic material flowing out of the bottom of hydrocyclone C101 is conveyed to the load tank VCS101 and there mixed with clean network water to rinse the sand, and then apportioned in a uniform manner in the spirals separator SSP101. A flowmeter FQ106 may be arranged on the network water supply line to measure and adjust the flow rate.

The flow, along the path of each spiral, causes the separation by gravity/centrifugation of the lighter organic fractions, that arrange themselves along the outermost "flow threads", from the sand that arranges itself along the innermost "flow threads". In the intermediate zone of the spirals there is a mixture of water, fine sand and organic particles. An end structure with separating baffles, located at the bottom of the spirals separator SSP101, performs the separation of the sand from the fine organic fraction, conveying each fraction to the relevant section of the final vibrating dryer. The intermediate fraction consisting of fine sand and organic particles, on the contrary, is directly conveyed to the waste water collection tank VS101 for the subsequent recirculation.

The sand vibrating dryer V 103 receives the water/sand mixture coming from the inner zone of the spirals separator SSP101, and possibly also that coming from the conical screen with 2,5 mm apertures of the barrel washer LBT101, as previously mentioned.

The vibrating dryer V103 consists of a steel frame that carries a vibrating screen box mounted on springs, whose plane is made of polyurethane with cross slots typically about 0,35 mm wide, but possibly also of other sizes. An oscillation is transmitted to the screen box by motorized vibrators, and this results in the drying and transport of the material ≤2 mm.

The sand, while depositing, releases water that flows down through the slots in the plane of the vibrating box and is collected in the underlying tank VS101. The sand thus dried is dehydrated to a dry percentage >80% and conveyed to a relevant storage container, either directly or by means of a conveyor belt N109.

Similarly, the organic particles vibrating dryer V102 receives the water/organic particles mixture coming from the outer zone of the spirals separator SSP101. The vibrating dryer V102 is different from the preceding vibrating dryer V 103 in that the box plane is typically made of a stainless steel net with about 0,5 x 0,5 mm mesh size, but a net different in mesh size and material (polyurethane) may also be used.

In this case too, the organic particles ≤2 mm, while depositing, release water that flows down through the apertures in the plane of the vibrating box and is collected in the underlying tank VS101, while the dehydrated organic material is conveyed to a relevant storage container, either directly or by means of a conveyor belt N110.

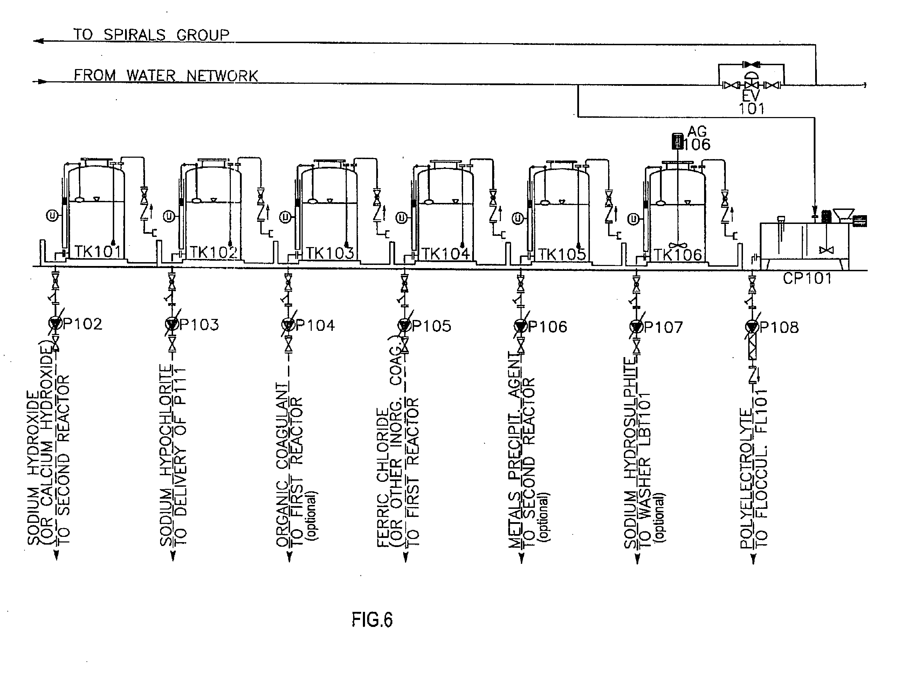

Referring now to figs.5 and 6, there is illustrated the section of the plant that carries out the physico-chemical treatment of the waste water coming from the hydrocyclone. Therefore said section serves the purposes of:
- removing the pollutants and silt from the process water and the residual water;
- allowing the reuse of the purified water in the wash cycle;
- purifying also the waters collected throughout the plant such as watery slurry, water from floor washing, overflows, etc. conveyed by a suitable drainage network and introduced in the wash cycle.

The physico-chemical treatment must be able to remove a great variety of pollutants and a flexible plant is therefore provided, although it must be considered that it is not necessary to destroy or precipitate all the pollutants since most of them is adsorbed on the silt and is separated anyway from the outgoing washed material.

The physico-chemical treatment section is sized for a waste water flow rate about six times the flow rate of the wastes to be washed, and essentially consists of:
- a rotating drum filter SGR101 for the removal of the fine and very fine organic particles from the waste water prior to the treatment of the latter;
- a reaction unit VS102 including two reaction tanks or reactors;
- a flocculator FL101;
- a sedimenter S101 for the separation of water from sludge;
- a group of tanks TK101-TK106 for storing and metering the reagents;
- an automatic station CP101 for the preparation of a flocculant polyelectrolyte.

The use of filter SGR101 at the entrance to the physico-chemical treatment section is made necessary by the fact that the waste water leaving hydrocyclone C101, in addition to silt and heavy particles sized <0,063 mm, also contains organic particles sized >0,10 mm. The removal of said organic particles is critical in that they can hardly be settled, and they would also increase the content in organic substances of the sludge, which therefore would be unsuitable for furnace recovery.

Therefore, prior to the entrance of the waste water into the reaction unit VS102 there is provided the rotating drum filter SGR101 for the separation of the organic particles >0,25 mm that are conveyed by gravity to a relevant container.

The reactors of unit VS102 consist of rectangular tanks formed in a monolithic structure internally coated with epoxide tar paint that resists chemicals and abrasion.

The filtered waste water leaving filter SGR101 is conveyed to a first coagulation reactor, having an active storage such as to allow a suitable contact period and provided with a high-speed agitator AG107. There may also be provided a set of hydraulic nozzles UG101, to suppress the possible foam without the use of chemical anti-foaming agents, and possibly a pH-meter PHT101.

Next to the coagulation reactor there is arranged a second reactor for the precipitation of metals, which is also provided with a high-speed agitator AG108, in addition to a pH-meter PHT102.

The hydraulic separation between the coagulation reactor and the metals precipitation reactor is achieved by means of a wall provided with nozzles that allow the flow of waste water while preventing short-circuit flows. A skimming device SK101 may be provided at the top of the wall to collect possible foam and/or floating substances.

Said skimming device SK101 may be of the stationary type, consisting of a rectangular collection bin with chutes for the manual filling by means of a suitable tool, or it may consist of a rotating skimmer with manual or power drive. The foam and/or floating substances are conveyed by gravity to a hopper pump P114 that sends them to the line leading to a sludge storage reservoir TK107 (fig.7).

The treated waste water leaving unit VS102 is conveyed to flocculator FL101 preferably by means of a pump P109, but it could flow to the flocculator even by gravity. A flowmeter FQ101 may be arranged on said line to measure and adjust the extracted flow rate.

Flocculator FL101 is provided with an agitator AG109 and a polyelectrolyte solution is preferably metered therein. The tank of flocculator FL101 is preferably arranged inside sedimenter S101, so that the waste water can flow out directly into the sedimenter through suitable bottom apertures formed in the flocculator, but it could as well be an independent tank outside the sedimenter and connected thereto through a suitable pipe.

In order to achieve a good clarification with limited sedimentation areas it is preferable to use a sedimenter S101 of the lamellar type, but it is also possible to use a conventional sedimenter with areas sufficient to guarantee a good liquid-solid separation.

The supernatant water leaving sedimenter S101 is conveyed to a storage tank VS103 for the purified process water (fig.8), whereas the sludge precipitated to the bottom (consisting of water, silt and pollutants precipitated in unit VS102) is conveyed to the above-mentioned sludge storage reservoir TK107 by means of a hopper pump P112, with manually adjustable flow-out rate and pause/operation timer, applied to the bottom of the sedimenter.

A flowmeter FQ105 may also be arranged on the sludge transfer line to measure and adjust the flow rate extracted from sedimenter S101, possibly combined with substances sent to the line by pump P114.

The reagents storage tanks are located in proper safety basins in compliance with prevailing regulations. Tanks are provided for the following reagents:
- a solution of sodium hypochlorite, stored in tank TK102 and fed by means of a pump P103 to the delivery line of pump P111 that sends the purified process water leaving tank VS103 to the barrel washer LBT101 (fig.8);
- a solution of sodium hydroxide or calcium hydroxide, stored in tank TK101 and fed by means of a pump P102 to the second tank of unit VS102 (metals precipitation reactor);
- a solution of ferric chloride or other inorganic coagulant, stored in tank TK104 and fed by means of a pump P105 to the first tank of unit VS102 (coagulation reactor).

Other optional tanks may be present for the following reagents:
- an organic coagulant, stored in tank TK103 and fed by means of a pump P104 to the first tank of unit VS102 (coagulation reactor);
- a metal precipitating agent, such as AQUALIFE HMP 20 or the like, stored in tank TK105 and fed by means of a pump P106 to the second tank of unit VS102 (metals precipitation reactor);
- a 12% solution of sodium hydrosulphite stored in tank TK106, provided with a relevant agitator AG106, and fed by means of a pump P107 to the barrel washer LBT101 (fig.1).

All the reagents are metered by metering pumps with manual adjustment of the flow-out rate.

For the preparation and metering of the flocculant polyelectrolyte fed to flocculator FL101 there is preferably provided a station CP101 for the automatic preparation of the polyelectrolyte with a 0,1-0,3% concentration. Said station CP101 includes:
- a powder metering section, with hopper, anti-condensate resistor, screw metering unit;
- an electrolyte dissolution section with supply unit, pipes and fittings, water/powder dilution unit;
- a section for the dilution and maturation/storage of the solution, complete with a two- or three-sectors tank, a low-speed agitator, level probes, accessories;
- a control panel.

The water required for the dissolution of the electrolyte is fed to the corresponding section of station CP101 through a network water supply pipe. The same pipe also supplies the spirals separator SSP101, through a relevant electrovalve EV 101.

It is clear that the automatic station CP101 could be replaced by a tank of a polyelectrolyte ready for use.

The polyelectrolyte is metered to flocculator FL101 by a single-screw metering pump P108, with manual adjustment of the flow-out rate, or by another type of pump.

The above-described physico-chemical section of the plant allows to perform the following physico-chemical treatments of the waste water:
- deodorization;
- removal of organic substances either dissolved, colloidal and/or suspended;
- removal of heavy metals;
- removal of hexavalent chrome CrVI;
- removal of particulate;
- removal of surfactants.

In the presence of entering materials polluted by hydrocarbons, oils and/or organic substances in general, bad odours could develop due to the strong mixing that the wastes undergo in washer LBT101. Therefore a solution of sodium hypochlorite at 11% of active chlorine, coming from tank TK102, is metered by pump P103 directly into the line that sends the purified process water to the barrel washer LBT101.

In this way, thanks to the strong oxidizing power of sodium hypochlorite, the dissolved organic substances are oxidized with resulting elimination of bad odours and volatile organic carbon.

For the removal of the colloidal and/or suspended organic substances, a solution of ferric chloride or other inorganic coagulant, coming from tank TK104, is metered by means of pump P105 in the first reactor of unit VS102, to the purpose of coagulating the suspended substances. Possibly, also an organic coagulant coming from tank TK103 may be metered by means of pump P104.

A solution of sodium hydroxide or calcium hydroxide, coming from tank TK101, is metered by means of pump P102 in the second reactor of unit VS102. The metering is controlled by pH-meter PHT102 with automatic pH adjustment. Moreover, a solution of flocculant polyelectrolyte is metered in flocculator FL101 by means of pump P108.

The removal of metals is achieved by precipitation in the form of hydroxides that are removed from water by separation of the sludge.

A solution of ferric chloride or other inorganic coagulant, coming from tank TK104, is metered by means of pump P105 in the first reactor of unit VS102, with the functions of coagulant and pH regulator. Possibly, also an organic coagulant coming from tank TK103 may be metered by means of pump P104 with the same functions of coagulant and pH regulator.

A solution of sodium hydroxide or calcium hydroxide, coming from tank TK101, is metered by means of pump P102 in the second reactor of unit VS102, possibly together with AQUALIFE HMP 20 or the like, coming from tank TK105 and metered by means of pump P106.

Moreover, a solution of polyelectrolyte, or other flocculant, is metered in flocculator FL101 by means of pump P108 in order to obtain highly compact flakes sized 3-5 mm.

The possible presence of CrVI in the materials to be washed is dangerous since CrVI is very toxic. It can be removed by first transforming it into CrIII and then precipitating CrIII as an hydroxide.

CrVI is reduced in the barrel washer LBT101 since its presence in the solution could facilitate its adsorption on the silt, and therefore this would result in having a CrVI-containing sludge to be disposed of.

For the reduction of CrVI to CrIII there is used a solution of sodium hydrosulphite that, contrary to sodium metabisulphite, has an effective reducing action in a pH range ≅ 7-9 and therefore does not require acidification to pH ≅ 3 as it would be necessary with the metabisulphite. The reduction reaction from CrVI to CrIII with sodium hydrosulphite is quite fast, and generally takes place within 4-5 minutes.

The metering of sodium hydrosulphite is determined through lab tests and performed by the metering pump P107 with manually adjustable flow-out rate, that sends the reagent directly to the entrance of the barrel washer LBT101.

Once reduced to CrIII, chrome easily precipitates still in washer LBT101, and in the rest of the hydraulic circuit, as hydroxide Cr(OH)₃ since a pH ≅ 7 or slightly alkaline is sufficient for the precipitation.

Referring now to fig.7, there is illustrated the portion of the plant relating to the mechanical dehydration of the sludge.

As previously mentioned, the sludge extracted from sedimenter S101 is sent, by means of pump P112, to a storage reservoir TK107 having a conical bottom, that also acts as a thickener. At the bottom of said reservoir there is arranged a pump P113 to feed a filter press FP101 used for the mechanical dehydration of the sludge.

Upon opening of the plates of filter press FP101, the filter-pressed cake drops directly into an underlying storage container, from where it is periodically conveyed to the final disposal, while the liquor drained from the dehydrated sludge is conveyed to the storage tank VS103.

It should be noted that there might be more than one sludge storage reservoir and that plate filter presses, belt filter presses and centrifuges may be used for the mechanical dehydration.

Referring finally to fig.8, there is illustrated the portion of the plant relating to the recirculation of the purified water and to the discharge of the excess water.

As previously mentioned, the purified water separated in sedimenter S101 is conveyed to the storage tank VS103, and from here it is recirculated to the wash section by means of two pumps having a flow-out rate suitable for the needs:
- a first centrifugal pump P111 feeding the barrel washer LBT101 in counter-current, as well as the vibrating screen V101, the vibrating dryers V 102-V 103 and all the users that require clean water (a flowmeter FQ104 may be provided on this supply line);
- a second centrifugal pump P110 feeding the barrel washer LBT101 at the waste entrance mouth, so as to drag inside the washer the materials to be washed (a flowmeter FQ103 may also be provided on this supply line).

It is obvious that, instead of the two pumps P110 and P111, a single pump of suitable head and flow-out rate could be used.

The purified excess water leaving through the overflow port of tank VS103 is discharged to the sewer system or as surface water, and a flowmeter FQ102 may also be provided on this discharge line.

The watery slurry coming from the various sections of the plant is conveyed to a relevant drain well PZ101 and from here is pumped, by means of a submersible pump P115, to the entrance mouth of the barrel washer LBT101. The water collected in the drain well PZ101 comes from the following sources:
- the overflow port of the waste water collection tank VS101;
- the overflow port of the reaction unit VS102 of the physico-chemical section;
- the overflow port of the sludge storage reservoir TK107;
- a bottom drain of the purified water storage tank VS103;
- flushing of the seals throughout the plant;
- collection gutters of the watery slurry, floor wash water, accident prevention shower.

It should be noted that the submersible pump P115 preferably operates in alternation with pump P110 that feeds the barrel washer at the waste entrance side, so as not to perturb the hydraulic balance of the system since the two pumps preferably have the same flow-out rate. Furthermore, said pump P115 is suitable to raise water containing sand and gravel up to 20 mm size.

For summary purposes, the list hereunder recites the above-mentioned members that make up the plant according to the present invention, with the indication in the "optional" column of each member that may also not be present.

| Ref. | Description | optional |
|---|---|---|
| AG101 | FRICTION CELL AGITATOR | X |
| AG102 | FRICTION CELL AGITATOR | X |
| AG103 | FRICTION CELL AGITATOR | X |
| AG104 | WASTE WATER TANK AGITATOR | X |
| AG105 | WASTE WATER TANK AGITATOR | X |
| AG106 | HYDROSULPHITE TANK AGITATOR | X |
| AG107 | REACTOR AGITATOR | |
| AG108 | REACTOR AGITATOR | |
| AG109 | FLOCCULATOR AGITATOR | |
| C101 | HYDROCYCLONE | |
| CCL101 | LOADING HOPPER SCREW | X |
| CCL102 | COMPACTOR | |
| CLA101 | FRICTION CELL | X |
| CP101 | POLYELECTROLYTE PREPARATION STATION | X |
| EV101 | ELECTROVALVE | X |
| FL101 | FLOCCULATOR | |
| FQ101 | FLOWMETER | X |
| FQ102 | FLOWMETER | X |
| FQ103 | FLOWMETER | X |
| FQ104 | FLOWMETER | X |
| FQ105 | FLOWMETER | X |
| FQ106 | FLOWMETER | X |
| FP101 | FILTER PRESS | |
| GR101 | ROUGH SCREEN | X |
| LBT101 | BARREL WASHER WITH 3 LEVELS SCREENING | |
| N101 | BELT (OR SCREW) EXTRACTOR | |
| N102 | BELT (OR SCREW) FEEDER | |
| N103 | BELT MAGNETIC SEPARATOR | |
| N104 | GRANULE CONVEYOR BELT | X |
| N105 | BELT MAGNETIC SEPARATOR | X |
| N106 | GRAVEL CONVEYOR BELT | X |
| N107 | BELT MAGNETIC SEPARATOR | X |
| N108 | EDDY CURRENT BELT SEPARATOR | X |
| N109 | SAND CONVEYOR BELT | X |
| N 110 | FINE ORGANIC FRACTION CONVEYOR BELT | X |
| P101 | HYDROCYCLONE+SPIRALS SEPARATOR FEED PUMP | |
| P 102 | SODIUM (OR CALCIUM) HYDROXIDE METERING PUMP | |
| P 103 | SODIUM HYPOCHLORITE METERING PUMP | |
| P104 | ORGANIC COAGULANT METERING PUMP | X |
| P105 | FERRIC CHLORIDE METERING PUMP | |
| P106 | METAL PRECIPITATING AGENT METERING PUMP | X |
| P107 | SODIUM HYDROSULPHITE METERING PUMP | X |
| P108 | POLYELECTROLYTE METERING PUMP | |
| P109 | SEDIMENTER FEED PUMP | X |
| P110 | PUMP TO RECIRCULATE WATER FROM VS103* | |
| P111 | PUMP TO RECIRCULATE WATER FROM VS103* | |
| P112 | PUMP TO EXTRACT SLUDGE FROM SEDIMENTER | |
| P113 | FILTER PRESS FEED PUMP | |
| P114 | FLOATING SUBSTANCES EXTRACTION PUMP | X |
| P115 | PUMP TO RECIRCULATE WATER FROM PZ101 | |
| PHT101 | PH-METER | X |
| PHT102 | PH-METER | |
| PZ101 | WATER DRAIN WELL | |
| S101 | SEDIMENTER | |
| SGR101 | FINE ROTATING DRUM FILTER | |
| SK101 | SKIMMING DEVICE | X |
| SSP101 | SPIRALS SEPARATOR | |
| T101 | LOADING HOPPER | |
| TK101 | SODIUM (OR CALCIUM) HYDROXIDE TANK | |
| TK102 | SODIUM HYPOCHLORITE TANK | |
| TK103 | ORGANIC COAGULANT TANK | X |
| TK104 | FERRIC CHLORIDE TANK | |
| TK105 | METAL PRECIPITATING AGENT TANK | X |
| TK106 | SODIUM HYDROSULPHITE TANK | X |
| TK107 | SLUDGE STORAGE RESERVOIR | |
| UG101 | FOAM-SUPPRESSING NOZZLES | X |
| V101 | VIBRATING SCREEN | |
| V102 | VIBRATING DRYER | |
| V103 | VIBRATING DRYER | |
| VC101 | REGULATION TANK | |
| VCS101 | SPIRALS LOADING TANK | |
| VG101 | REGULATION FLOAT VALVE | |
| VS101 | WASTE WATER COLLECTION TANK | |
| VS102 | PHYSICO-CHEMICAL TREATMENT TANKS (REACTORS) | |
| VS103 | RECIRCULATED WATER STORAGE TANK | |

| | | |
|---|---|---|
| *= the plant might include only one of these two pumps | | |

The process for the recycling of wastes performed with the above-described plant can therefore be schematized in the following steps:
a) separating and recovering the ferrous metals contained in the material;
b) washing and screening the material with separation of the organic fraction from the inert fraction;
c) dividing said inert fraction on the base of the grain size;
d) compacting said light organic fraction;
e) collecting the waste water resulting from said washing and screening operations;
f) separating the fine organic fraction and sand from said waste water;
g) separating the very fine organic particles from said waste water;
h) physico-chemical treatment of the waste water with reagents for the removal of the polluting substances;
i) flocculating the waste water by means of a flocculating solution;
j) sedimenting the thus treated waste water, with separation of the physico-chemical treatment sludge from the supernatant water;
k) collecting the supernatant water resulting from said sedimentation;
l) dehydrating the sludge resulting from said sedimentation;
m) collecting the water resulting from said dehydration;
n) collecting the water coming from overflow ports, flushing of the seals, watery slurry, floor wash water, etc.; and
o) reusing the water collected in said collection steps (steps k, m, n) for the material washing and screening step b), a solution of sodium hypochlorite being added to said reused water.

The above-listed essential process steps may obviously be combined with further optional steps carried out by means of the optional members of the plant. The following steps may be listed for exemplificative purposes:
a') rough screening of the material (prior to step a);
b') introducing sodium hydrosulphite while washing and screening (during step b);
c') separating and recovering ferrous and non-ferrous metals (during step c);
f) washing and decontaminating the sand particles by scrubbing in a friction cell (during step f);
h') physico-chemical treatment of the waste water with a reagent for the coagulation of the organic substances and/or a further reagent for the precipitation of metals (during step h); and
i') preparing and feeding a solution of flocculating polyelectrolyte (prior to step i).

## Claims

1. Plant for the recycling of sweepings, wastes from water purifiers, excavations, bonifications and the like, including four sections:
• a first section suitable to carry out the wash and screening of the materials, with separation of the light organic fraction from the inert fraction and division of the latter on the base of the grain size;
• a second section suitable to carry out the physico-chemical treatment of the waste water, resulting from said wash and screening operations, with reagents for the removal of the pollutants, with subsequent separation of the sludge resulting from said physico-chemical treatment;
• a third section suitable to carry out the mechanical dehydration of said sludge; and
• a fourth section suitable to carry out the storage of the water collected throughout the plant and the recirculation thereof to the first section for the wash, **characterized in that** said second section includes a tank (TK102) storing a solution of sodium hypochlorite, said tank (TK102) being connected by means of a pump (P103) to a line extending between said fourth section and a wash and screening unit in the first section whereby said solution of sodium hypochlorite is added by means of said pump (P103) to a portion of the water recycled in the plant between the fourth section and the wash and screening unit in the first section.

2. Plant according to claim 1, **characterized in that** the second section further includes a tank (TK106), provided with an agitator (AG106), storing a solution of sodium hydrosulphite, said tank (TK106) being connected by means of a pump (P107) to a line extending between said second section and the entrance of a wash and screening unit in the first section.

3. Plant according to claim 1 or 2, **characterized in that** the second section further includes a rotating drum filter (SGR101) suitable to separate organic particles >0,25 mm from the waste water coming from the first wash and screening section ;
• a reaction unit (VS102) connected through a line to said rotating drum filter (SGR101) to receive the filtered water therefrom and including a first coagulation reactor provided with an agitator (AG107) and a second reactor for the precipitation of metals, also provided with an agitator (AG108) as well as with a pH-meter (PHT 102);
• a flocculator (FL101), provided with an agitator (AG109), connected through a line to said reaction unit (VS102) to receive the waste water treated therein;
• a sedimenter (S101) connected through a line to said flocculator (FL101) for the separation of water from sludge to receive the waste water therefrom;
• a pump (P112) applied to the bottom of said sedimenter (S101) for the extraction of said sludge;
• a tank (TK101) storing a solution of sodium hydroxide or calcium hydroxide, fed by means of a pump (P 102) to the metals precipitation reactor of said reaction unit (VS102);
• a tank (TK104) storing a solution of ferric chloride or other inorganic coagulant, fed by means of a pump (P105) to the coagulation reactor of the reaction unit (VS102); and
• a source of a flocculant solution, fed by means of a pump (P108) to the flocculator (FL101).

4. Plant according to the preceding claim, **characterized in that** the flocculator (FL101) is arranged inside the sedimenter (S101).

5. Plant according to claim 3 or 4, **characterized in that** the source of flocculant solution consists of an automatic station (CP101) for the preparation of a solution of polyelectrolyte.

6. Plant according to any of the preceding claims, **characterized in that** the second section further includes at least one of the following members:
• a set of foam-suppressing hydraulic nozzles (UG101) arranged above the coagulation reactor of the reaction unit (VS102);
• a pH-meter (PHT101) arranged in the coagulation reactor of the reaction unit (VS102);
• a skimming device (SK101), arranged at the top of the dividing wall between the coagulation reactor and the metals precipitation reactor of the reaction unit (VS102), suitable to remove foam and floating substances and connected to a pump (P114) in communication with the delivery line of the pump (P112) applied to the bottom of the sedimenter (S101);
• a pump (P109) to send the treated waste water leaving the reaction unit (VS102) to the flocculator (FL101);
• a flowmeter (FQ101) arranged on the connection line between the reaction unit (VS102) and the flocculator (FL101);
• a flowmeter (FQ105) arranged on the delivery line of the pump (P112) applied to the bottom of the sedimenter (S101);
• a tank (TK103) storing an organic coagulant, fed by means of a pump (P104) to the coagulation reactor of the reaction unit (VS102);
• a tank (TK105) storing a metal precipitating agent, fed by means of a pump (P106) to the metals precipitation reactor of the reaction unit (VS102).

7. Plant according to any of the preceding claims, **characterized in that** the first wash and screening section includes:
• a loading hopper (T101) with relevant belt (N101) for the extraction of wastes from said hopper (T101);
• a belt feeder (N102) for conveying the material from said belt extractor (N101) to a wash and screening unit;
• a magnetic separator (N 103) arranged above said belt feeder (N102);
• a wash and screening unit for receiving the materials from said belt feeder (N102);
• a vibrating screen (V101) provided with nozzles, suitable to wash and separate the light organic fraction;
• a screw compactor (CCL102) for the dehydration of said washed and separated organic fraction;
a collection tank (VS101) for the waste water coming from said vibrating screen (V101) and possibly from said wash and screening unit and from said screw compactor (CCL102);
• a regulation tank (VC101) connected to said collection tank (VS101) and suitable, in combination with a float valve (VG101), to maintain a minimum level in the collection tank (VS101) sufficient for the operation of a pump (P101) for drawing the waste water;
• a pump (P101) arranged on a line extending between said collection tank (VS101) and a hydrocyclone (C101) suitable to separate the sandy fractions from the silt-containing waste water, a line extending between the top nozzle of said hydrocyclone (C101) and said regulation tank (VC101) for feeding water from the former to the latter;
• a spirals separator (SSP101) provided at the top end with a loading tank (VCS101) for the apportionment of the feeding to the various spirals of said sandy fractions leaving through the bottom portion of the hydrocyclone (C101);
• a pipe for supplying network water to said loading tank (VCS101);
• a first vibrating dryer (V102), arranged above the collection tank (VS101), suitable to dry a water/organic particles mixture coming from said spirals separator (SSP101); and
• a second vibrating dryer (V103), arranged above the collection tank (VS101), suitable to dry a water/sand mixture coming from the spirals separator (SSP101) and possibly from the wash and screening unit.

8. Plant according to the preceding claim, **characterized in that** the wash and screening unit consists of a barrel washer (LBT101) made up of a counter-current wash barrel at the outlet of which there are formed three screening zones by means of three frustoconical concentric screens connected to the wash barrel through flanges and screws, in addition to a bottom zone for the removal of the inert fraction and a head spillway for the outflow of the waste water containing the organic fraction, fine sand and silt.

9. Plant according to the preceding claim, **characterized in that** the three frustoconical screens of the barrel washer (LBT101) have screening surfaces with apertures of 2,5 mm, 8 mm and 30 mm in diameter respectively.

10. Plant according to any of the preceding claims, **characterized in that** the first wash and screening section further includes at least one of the following members:
• a screen (GR101) suitable to separate material ≥ 120 mm, arranged above the loading hopper (T101);
• a transverse screw (CCL101) arranged at the outlet of the loading hopper (T101);
• a conveyor belt (N104) for conveying to a relevant storage container the granule with size 2-8 mm that leaves the wash and screening unit;
• a magnetic separator (N105) arranged above said conveyor belt (N104) for the granule;
• a conveyor belt (N106) for conveying to a relevant storage container the gravel with size 8-30 mm that leaves the wash and screening unit;
• a magnetic separator (N107) arranged above said conveyor belt (N106) for the gravel;
• an eddy current belt separator (N108) arranged above said conveyor belt (N106) for the gravel;
• one or more agitators (AG104, AG105) arranged in the waste water collection tank (VS101);
• a friction cell (CLA101) arranged between the hydrocyclone (C101) and the spirals separator (SSP101) and provided with a plurality of agitators (AG101, AG102, AG103);
• a conveyor belt (N110) for conveying to a relevant storage container the organic fraction < 2 mm that leaves the first vibrating dryer (V 102);
• a conveyor belt (N109) for conveying to a relevant storage container the sand that leaves the second vibrating dryer (V 103); and
• a flowmeter (FQ106) arranged on the network water supply pipe to the loading tank (VCS101).

11. Plant according to any of the preceding claims, **characterized in that** the third section for the mechanical dehydration of the sludge includes:
• a sludge storage reservoir (TK107) connected to the delivery line of the pump (P112) applied to the bottom of the sedimenter (S101);
• a pump (P113) arranged at the bottom of said sludge storage reservoir (TK107) for the extraction of said sludge;
• a filter press (FP101) capable of mechanically dehydrating the sludge, fed by said pump (P113) of the sludge storage reservoir (TK107).

12. Plant according to any of the preceding claims, **characterized in that** the fourth section for the storage and recirculation of the water collected throughout the plant includes:
• a storage tank (VS103) for the water separated from the sludge in the second and third sections of the plant;
• a drain well (PZ101) for collecting the water coming from the overflow ports of the members of the first three sections of the plant, a bottom drain of said storage tank (VS103), seals throughout the plant, collection gutters of the watery slurry and other users;
• a first pump (P110) for drawing water from the storage tank (VS103) to feed the wash and screening unit at the waste entrance mouth ;
• a second pump (P111) for drawing water from the storage tank (VS103) to feed the wash and screening unit in counter-current, as well as the other users of the first section of the plant that require clean water;
• a third pump (P115) for drawing water from said drain well (PZ101) to feed the wash and screening unit at the waste entrance mouth; and
• a pipe to discharge to the sewer system and the overflow port of the storage tank (VS103).

13. Plant according to the preceding claim, **characterized in that** the third pump (P115) is operatively connected to the first pump (P110) so as to operate in alternation therewith, said pumps (P110, P115) having the same flow-out rate.

14. Plant according to any of the preceding claims, **characterized in that** the fourth section for the storage and recirculation of the water further includes at least one of the following members:
• a flowmeter (FQ102) arranged on said discharge pipe of the overflow port of the storage tank (VS103);
• a flowmeter (FQ103) arranged on the delivery line of the first pump (P110);
• a flowmeter (FQ104) arranged on the delivery line of the second pump (P111).

15. Process for the recycling of sweepings, wastes from water purifiers, excavations, bonifications and the like including the following steps:
a) separating and recovering the ferrous metals contained in the material;
b) washing and screening the material with separation of the organic fraction from the inert fraction;
c) dividing said inert fraction on the base of the grain size;
d) compacting said light organic fraction;
e) collecting the waste water resulting from said washing and screening operations;
f) separating the organic fraction < 2 mm and sand from said waste water;
g) separating the organic particles > 0,25 mm from said waste water;
h) physico-chemical treatment of the waste water with reagents for the removal of the polluting substances;
i) flocculating the waste water by means of a flocculating solution;
j) sedimenting the thus treated waste water, with separation of the physico-chemical treatment sludge from the supernatant water;
k) collecting the supernatant water resulting from said sedimentation;
l) dehydrating the sludge resulting from said sedimentation;
m) collecting the water resulting from said dehydration;
n) collecting the water coming from overflow ports, flushing of the seals, watery slurry, floor wash water, etc.; and
o) reusing the water collected in said collection steps k), m) and n) for the
material washing and screening step b),
**characterized in that** in the last step o) a solution of sodium hypochlorite is added to the water reused for the material washing and screening step b).

16. Process according to the preceding claim, **characterized in that** the solution of sodium hypochlorite is a solution at 11% of active chlorine.

17. Process according to claim 15 or 16, **characterized in that** it further includes a step b') of introducing a solution of sodium hydrosulphite while washing and screening during step b).

18. Process according to the preceding claim, **characterized in that** it further includes at least one of the following steps:
a') rough screening of the material prior to step a);
c') separating and recovering ferrous and non-ferrous metals during step c);
f) washing and decontaminating the sand particles by scrubbing in a friction cell during step f);
h') physico-chemical treatment of the waste water with a reagent for the coagulation of the organic substances and possibly a further reagent for the precipitation of metals during step h); and
i') preparing and feeding a solution of flocculating polyelectrolyte prior to step i).

## Patentansprüche

1. Anlage zur Wiederaufbereitung von Kehrgut, Abfällen aus Wasserreinigungsgeräten, Bodenabtragungen, Sanierungen und dergleichen, bestehend aus vier Bereichen:
• Einem ersten Bereich, der geeignet ist, das Material zu waschen und zu sichten, wobei die leichte organische Fraktion von der inerten getrennt wird und dabei die Trennung der letzteren auf Basis der Korngröße erfolgt;
• einem zweiten Bereich, der geeignet ist zur physikalischchemischen Behandlung des Abwassers, welches aus dem vorherigen Wasch- und Sichtungsvorgang erhalten wurde, mittels Reagenzien zur Entfernung der Verunreinigungen, und mit einem darauf folgenden Abtrennprozess des aus der physikalischchemischen Behandlung erhaltenen Schlamms;
• einem dritten Bereich, der geeignet ist, eine Trocknung des besagten Schlamms durchzuführen; und
• einem vierten Bereich, der geeignet ist, die Lagerung des in der Anlage gesammelten Wassers zu übernehmen sowie dessen Wiedereinspeisung in den ersten Bereich zur Waschung,
**dadurch gekennzeichnet, dass** der beschriebene zweite Bereich einen Behälter (TK102) umfasst, in dem eine Natriumhypochlorit-Lösung gespeichert ist, wobei besagter Behälter (TK102) mittels einer Pumpe (P103) mit einer Leitung verbunden ist, die sich zwischen besagtem vierten Bereich und einer Wasch- und Sichtungseinheit im ersten Bereich erstreckt, wobei besagte Natriumhypochlorit-Lösung mittels der besagten Pumpe (P103) einem Anteil des Wassers hinzugefügt wird, welches in der Anlage zwischen dem vierten Bereich und der Wasch-und Sichtungseinheit des ersten Bereiches aufbereitet wurde.

2. Anlage nach Anspruch 1, **dadurch gekennzeichnet, dass** der zweite Bereich weiterhin einen Behälter (TK106) umfasst, der mit einem Rührer (AG106) ausgestattet ist, und eine Natriumhydrogensulfit-Lösung beinhaltet, wobei besagter Behälter (TK106) mittels einer Pumpe (P107) mit einer Leitung verbunden ist, die sich zwischen dem besagten zweiten Bereich und dem Eingang einer Wasch- und Sichtungseinheit im ersten Bereich erstreckt.

3. Anlage nach Anspruch 1 oder 2, **dadurch gekennzeichnet, dass** der zweite Bereich weiterhin einen rotierenden Trommelfilter (SGR101) umfasst, der geeignet ist, organische Partikel > 0,25 mm von dem aus der ersten Wasch- und Sichtungseinheit erhaltenen Abwasser abzutrennen;
• eine Reaktionseinheit (VS102), welche mittels einer Leitung an besagtem rotierenden Trommelfilter (SGR101) angeschlossen ist, um daraus das gefiltertes Wasser aufzunehmen, und welche einen ersten, mit einem Rührer (AG107) ausgestatteten Koagulationsreaktor umfasst, sowie einen zweiten Reaktor, vorgesehen zur Ausfällung von Metallen, der ebenfalls mit einem Rührer (AG108) ausgestattet ist, sowie auch mit einem pH-Meter (PHT102);
• einen Flockulator (FL101), ausgestattet mit einem Rührer (AG 109), der mittels einer Leitung mit besagter Reaktionseinheit (VS 102) verbunden ist, um daraus das hierin behandelte Abwasser zu erhalten;
• einen Sedimentierer (S101), der mittels einer Leitung an dem besagten Flockulator (FL101) für die Trennung von Wasser von Schlamm angeschlossen ist, um daraus das Abwasser zu erhalten;
• eine Pumpe (P112), die am Boden des besagten Sedimentierers (S101) angebracht ist, um besagten Schlamm zu extrahieren;
• einen Behälter (TK101), in welchem eine Lösung aus Natriumhydroxid oder Calciumhydroxid gespeichert ist, welche mittels einer Pumpe (P102) in den Metallausfällungsreaktor der besagten Reaktionseinheit (VS102) eingespeist wird;
• einen Behälter (TK104), in welchem eine Lösung aus Eisen(III)chlorid oder einem anderen, anorganischen Koagulans gespeichert ist, welche mittels einer Pumpe (P105) in den Koagulationsreaktor der besagten Reaktionseinheit (VS102) eingespeist wird; und
• eine Quelle einer Flockungslösung, welche mittels einer Pumpe (P108) in den Flockulator (FL101) eingespeist wird.

4. Anlage nach dem vorhergehenden Anspruch, **dadurch gekennzeichnet, dass** der Flockulator (FL101) innerhalb des Sedimentierers (S101) angebracht ist.

5. Anlage nach Anspruch 3 oder 4, **dadurch gekennzeichnet, dass** die Quelle der Ausflockungslösung aus einer automatischen Station (CP101) zur Herstellung der Polyelektrolytlösung besteht.

6. Anlage nach irgendeinem der vorhergehenden Ansprüche, **dadurch gekennzeichnet, dass** die zweite Einheit weiterhin mindestens eines der folgenden Bauteile beinhaltet:
• Eine Reihe von hydraulischen Düsen (UG101) zur Schaumunterdrückung, die oberhalb des Koagulationsreaktors der Reaktionseinheit (VS102) angebracht sind;
• ein pH-Meter (PHT101), welches in dem Koagulationsreaktor der Reaktionseinheit (VS102) installiert ist;
• eine Abschöpfeinheit (SK101), die sich am Kopfende der Trennwand zwischen Koagulationsreaktor und MetallAusfällungsreaktor der Reaktionseinheit (VS102) befindet und geeignet ist, Schaum oder aufschwimmende Substanzen zu entfernen, und die mit einer Pumpe (P114) verbunden ist, wobei besagte Pumpe in Kommunikation mit der Versorgungsleitung der Pumpe (P112) steht, welche sich am Boden des Sedimentierers (S101) befindet;
• eine Pumpe (P109), welche das behandelte Abwasser aus der Reaktionseinheit (VS102) in den Flockulator (FL101) pumpen soll;
• einen Durchflussmesser (FQ101), der an der Verbindungszuleitung zwischen Reaktionseinheit (VS102) und dem Flockulator (FL101) angebracht ist;
• einen Durchflussmesser (FQ105), der an der Versorgungszuleitung der Pumpe (P112), am Boden des Sedimentierers (S101) angebracht ist;
• einen Behälter (TK103), der ein organisches Koagulanz beinhaltet, welches mittels einer Pumpe (P104) in den Koagulationsreaktor der Reaktionseinheit (VS102) eingespeist wird;
• eine Behälter (TK105), der ein Metallfällungsreagenz enthält, welches mittels einer Pumpe (P106) in den Metallfällungsreaktor der Reaktionseinheit (VS102) eingespeist wird.

7. Anlage nach irgendeinem der vorhergehenden Ansprüche, **dadurch gekennzeichnet, dass** die erste Wasch- und Sichtungseinheit beinhaltet:
• Einen Einfülltrichter (T101) mit entsprechendem Förderband (N101) zum Abtransport des Abfalles von besagtem Einfülltrichter;
• einen Bandaufgeber (N102) zur Förderung des Materials von besagtem Förderband (N101) zu einer Wasch- und Sichtungseinheit;
• einen magnetischen Abscheider (N103), der oberhalb des besagten Förderbandes (N102) angebracht ist;
• eine Wasch- und Sichtungseinheit, um die Materialien von besagtem Förderband (N102) zu gewinnen;
• ein mit Düsen ausgestattetes Schüttelsieb (V101), welches geeignet ist, die leichte organische Fraktion zu waschen und zu trennen;
• eine Schraubenpresse (CCL102) zur Dehydrierung der besagten gewaschenen und getrennten organischen Fraktion;
• einen Sammelbehälter (VS101) für das Abwasser, welches von besagtem Schüttelsieb (V101) und möglicherweise von besagter Wasch- und Sichtungseinheit und besagter Schraubenpresse (CCL102) kommt;
• einen Ausgleichsbehälter (VC101), der mit besagtem Sammelbehälter (VS101) verbunden ist und in Kombination mit einem Schwimmerventil (VG101) geeignet ist, einen Mindestfüllstand im Sammelbehälter (VS101) aufrechtzuerhalten, welcher ausreichend ist für den Betrieb der Pumpe (P101) zum Abwassertransport;
• eine Pumpe (P101), die auf einer Leitung angebracht ist, welche sich zwischen besagtem Sammelbehälter (VS101) und einem zur Abtrennung der sandhaltigen Abwasserfraktion von der schlammhaltigen geeigneten Hydrozyklon erstreckt, wobei eine Zuleitung sich zwischen der obersten Düse des besagten Hydrozyklons (C101) und besagtem Regulationstank (VC101) erstreckt, um Wasser von ersterem in letzteren einzuspeisen;
• einen Schneckenabscheider (SSP101), an dessen Kopfseite sich ein Auffüllbehälter (VCS101) befindet, der die Beschickung der verschiedenen Spiralen mit besagten sandhaltigen Fraktionen, welche den Hydrozyklon (C101) an seiner Unterseite verlassen haben, einteilt;
• ein Rohr, durch welches das Netzwerkwasser in besagten Auffülltank (VCS101) gelangt;
• einen ersten, oberhalb des Sammelbehälters (VS101) angebrachten Rütteltrockner (V102), welcher geeignet ist, eine Mischung aus Wasser und organischen Partikeln, die den Schneckenabscheider (SSP101) verlassen haben und mögliche Partikel aus der Wasch- und Sichtungseinheit, zu trocknen;
• einen zweiten, oberhalb des Sammelbehälters (VS101) angebrachten Rütteltrockner (V103), welcher geeignet ist, eine Mischung aus Wasser und Sand, welche den Schneckenabscheider (SSP101) verlassen haben und möglicherweise aus der Wasch- und Sichtungseinheit kommen, zu trocknen.

8. Anlage nach dem vorhergehenden Anspruch, **dadurch gekennzeichnet, dass** die Wasch- und Sichtungseinheit aus einem Bodenbereich zur Entfernung der inerten Fraktion besteht und einem oben befindlichen Überlauf zu Auslaß des mit organischer Fraktion, feinem Sand und Schlamm beladenen Abwassers. Zusätzlich dazu enthält die Wasch-und Sichtungseinheit einen Trommelwäscher (LBT101), der an seinem Auslaß als Gegenstromwascheinrichtung konstruiert ist, wobei diese Gegenstromwascheinrichtung aus drei Sichtungszonen besteht, die durch drei kegelstumpfförmige, konzentrische Siebe gebildet werden, die mit der Waschtrommel durch Flansche und Schrauben verbunden sind.

9. Anlage nach dem vorhergehenden Anspruch, **dadurch gekennzeichnet, dass** die drei kegelstumpfförmigen Siebe des Trommelwäschers (LBT101) Sieboberflächen mit Öffnungen von 2,5 mm, bzw. 8 mm und 30 mm Durchmesser haben.

10. Anlage nach irgendeinem der vorhergehenden Ansprüche, **dadurch gekennzeichnet, dass** die erste Wasch- und Sichtungseinheit zusätzlich wenigstens eines der folgenden Bauteile enthält:
• Ein oberhalb des Einfülltrichters (T101) angebrachtes Sieb
(GR101), welches dazu geeignet ist, Material ≥ 120 mm abzutrennen;
• eine quer verlaufende Schraube (CCL101), die am Auslaß des Einfülltrichters (T101) installiert ist;
• ein Förderband (N104), welches Granulat der Größe 2 bis 8 mm aus der Wasch- und Sichtungseinheit in einen dazugehörigen Lagercontainer transportieren soll;
• einen Magnetabscheider (N105), der oberhalb des besagten Föderbandes (N104) für Körnchen positioniert ist;
• ein Förderband (N106), welches Granulat der Größe 8 bis 30 mm aus der Wasch- und Sichtungseinheit in einen dazugehörigen Lagercontainer transportieren soll;
• einen Magnetabscheider (N107), der oberhalb des besagten Föderbandes (N106) für den Schotter positioniert ist;
• einen Wirbelstrombandabscheider (N108), der oberhalb des besagten Schotter-Förderbandes (N106) angebracht ist;
• einen oder mehrere Rührer (AG104, AG105), die innerhalb des Abwassersammelbehälters (VS101) installiert sind;
• ein Friktionsbecken (CLA101), welches zwischen dem Hydrozyklon (C101) und dem Schneckenabscheider (SSP101) angebracht ist und mit einer Vielzahl von Rührern (AG101, AG102, AG103) ausgestattet ist;
• ein Förderband (N110), welches die organische Fraktion < 2mm aus dem ersten Rütteltrockner (V102) in einen dazugehörigen Lagercontainer transportieren soll;
• ein Förderband (N109), welches den Sand aus dem zweiten Rütteltrockner (V103) in einen dazugehörigen Lagercontainer transportieren soll; und
• einen Durchflussmesser (FQ106), der an dem Netzwerkwasserversorgungsrohr zum Einfüllbehälter angebracht ist.

11. Anlage nach irgendeinem der vorhergehenden Ansprüche, **dadurch gekennzeichnet, dass** der dritte Bereich zur mechanischen Schlammdehydrierung beinhaltet:
• Einen Schlammspeicherbehälter (TK107), der mit einer Leitung der Pumpe (P112) verbunden ist, welche unterhalb des Sedimentieres (S101) angebracht ist;
• eine Pumpe (P113), welche unterhalb des besagten Schlammspeicherbehälters (TK107) angebracht ist, um den besagten Schlamm abzutrennen;
• eine Filterpresse (FP101), die eine mechanische Dehydrierung des Schlammes vornehmen kann, wobei diese Filterpresse (FP101) durch besagte Pumpe (P113) des Schlammspeicherbehälters (TK107) gespeist wird.

12. Anlage nach irgendeinem der vorhergehenden Ansprüche, **dadurch gekennzeichnet, dass** der vierte Bereich zur Lagerung und Rückführung des in der Anlage gesammelten Wassers beinhaltet:
• Einen Vorratsbehälter (VS103) für das vom Schlamm in Bereich zwei und drei getrennte Wasser;
• einen Sickerschacht (PZ101) zum Auffangen des Wassers aus dem Überlauf der ersten drei Bereiche der Anlage, ein unterseitiger Ablauf des besagten Lagerbehälters (VS103), Dichtungen verteilt in der Anlage, Sammelrinnen für den dünnflüssigen wäßrigen Schlamm und andere Abnehmer;
• eine erste Pumpe (P110) zum Ansaugen von Wasser aus dem Vorratstank (VS103), um die Wasch-und Sichtungseinheit an dem Abwassereingangsmund einzuspeisen;
• eine zweite Pumpe (P111) zum Ansaugen von Wasser aus dem Vorratstank (VS103), um die Wasch- und Sichtungseinheit im Gegenstrom einzuspeisen, sowie auch die anderen Abnehmer des ersten Bereiches der Anlage einzuspeisen, die sauberes Wasser benötigen;
• eine dritte Pumpe (P115) zum Ansaugen von Wasser aus dem Sickerschacht (PZ101), um die Wasch- und Sichtungseinheit an dem Abwassereingangsmund einzuspeisen;
• eine Rohrleitung zur Ableitung zum Abwassersystem und zu den Überlauföffnungen des Lagerbehälters (VS103).

13. Anlage nach dem vorhergehenden Anspruch, **dadurch gekennzeichnet, dass** die dritte Pumpe (P115) mit der ersten Pumpe (P110) operativ gekoppelt ist, indem diese alternierend betrieben werden und dieselbe Ausflußrate haben.

14. Anlage nach irgendeinem der vorhergehenden Ansprüche, **dadurch gekennzeichnet, dass** der vierte Bereich zur Speicherung und Rückführung des in der Anlage gesammelten Wassers zusätzlich wenigstens eines der folgenden Elemente beinhaltet:
• Einen Durchflußmesser (FQ102), angebracht an besagtem Abflussrohr der Überlauföffnung des Lagerbehälters (VS103);
• einen Durchflußmesser (FQ103), angebracht an dem Zuleitungsrohr der ersten Pumpe (P110);
• einen Durchflußmesser (FQ104), angebracht an dem Zuleitungsrohr der zweiten Pumpe (P111).

15. Verfahren zur Wiederaufbereitung von Kehrgut, Abfällen aus Wasserreinigungsgeräten, Bodenabtragungen, Sanierungen und dergleichen, welches die folgenden Schritte umfasst:
a) Abtrennung und Wiedergewinnung der eisenhaltigen Metalle, die in dem Material enthalten sind;
b) Waschen und Sichten des Materials unter Abtrennung der organischen Fraktion von der inerten Fraktion;
c) Auftrennung der besagten inerten Fraktion nach Korngröße;
d) Verdichten der besagten leichten organischen Fraktion;
e) Sammeln des Abwassers, welches aus den besagten Wasch- und Sichtungsvorgängen gewonnen wird;
f) Abtrennung der organischen Fraktion < 2mm und Sand von besagtem Abwasser;
g) Abtrennung der organischen Partikel > 0,25 mm von besagtem Abwasser;
h) physikalisch-chemische Behandlung des Abwassers mit Hilfe von Reagenzien zur Entfernung der verschmutzenden Substanzen;
i) Ausflockung des Abwassers mit Hilfe einer Flockungslösung;
j) Sedimentierung des so behandelten Abwassers, unter Abtrennung des durch physikalisch-chemische Verfahren behandelten Schlamms von dem darüber stehenden Wasser;
k) Sammlung des überstehenden Wassers aus dem besagten Sedimentationsprozess;
l) Sammlung des Schlamms aus der besagten Dehydrierung;
m) Sammlung des Wasser aus der besagten Dehydrierung;
n) Sammlung des Wassers aus Überlauföffnungen, von Spülungen der Dichtungen, aus wäßrigem, dünnflüssigen Schlamm, Bodenwaschwasser, etc.; und
o) Wiederverwendung des gesammelten Wassers aus den Sammelschritten k), m) und n) zur Benutzung während des Wasch- und Sichtungsschritts b),
**dadurch gekennzeichnet, dass** im letzten Schritt o) eine Natriumhypochlorit-Lösung dem zum Wasch- und Sichtungsschritt b) wiederverwendeten Wasser hinzugefügt wird.

16. Verfahren nach dem vorhergehenden Anspruch, **dadurch gekennzeichnet, dass** die Natriumhypochlorit-Lösung einen Gehalt von 11% aktivem Chlor enthält.

17. Verfahren nach Anspruch 15 und 16, **dadurch gekennzeichnet, dass** es zusätzlich einen Schritt b') beinhaltet, wobei eine Lösung von Natriumhydrogensulfit während des Wasch- und Sichtungsschrittes b) eingeleitet wird.

18. Verfahren nach dem vorhergehenden Anspruch, **dadurch** gekenntzeichnet, dass es zusätzlich wenigstens einen der folgenden Schritte umfasst:
a') Grobsichtung des Materials vor dem Schritt a);
c') Abtrennung von eisenhaltigen und nichteisenhaltigen Metallen während Schritt c);
f') Waschen und Dekontaminieren der Sandpartikel durch Scheuern in einem Friktionsbecken während Schritt f);
h') physikalisch-chemische Behandlung des Abwassers mit einem Koagulanz für organische Substanzen und möglicherweise ein weiteres Reagenz zur Ausfällung der Metalle während Schritt h); und
i') Zubereitung und Einspeisung einer polyelektrolytischen Flockungslösung vor dem Schritt i).

## Revendications

1. Installation pour le recyclage des balayures, des déchets provenant des épurateurs d'eau, des excavations, des assainissements et similaires, comprenant quatre sections :
une première section appropriée pour réaliser le lavage et le tamisage des matériaux, avec la séparation de la partie organique légère de la partie inerte et la division de cette dernière en fonction de la taille du grain ;
une deuxième section appropriée pour réaliser le traitement physicochimique des eaux usées, provenant desdites opérations de lavage et de tamisage, avec des réactifs pour le retrait des polluants, avec la séparation successive des boues provenant dudit traitement physicochimique ;
une troisième section appropriée pour réaliser la déshydratation mécanique de ladite boue ; et
une quatrième section appropriée pour réaliser le stockage de l'eau collectée dans toute l'installation et son recyclage jusqu'à la première section pour le lavage, **caractérisée en ce que** la deuxième section comprend un réservoir (TK102) stockant une solution d'hypochlorite de sodium, ledit réservoir (TK102) étant raccordé au moyen d'une pompe (P103) à une conduite s'étendant entre ladite quatrième section et une unité de lavage et de tamisage dans la première section, moyennant quoi ladite solution d'hypochlorite de sodium est ajoutée au moyen de ladite pompe (P103) à une partie de l'eau recyclée dans l'installation entre la quatrième section et l'unité de lavage et de tamisage dans la première section.

2. Installation selon la revendication 1, **caractérisée en ce que** la deuxième section comprend en outre un réservoir (TK106), doté d'un agitateur (AG106), stockant une solution d'hydrosulfite de sodium, ledit réservoir (TK106) étant raccordé au moyen d'une pompe (P107) à une conduite s'étendant entre ladite deuxième section et l'entrée d'une unité de lavage et de tamisage dans la première section.

3. Installation selon la revendication 1 ou 2, **caractérisée en ce que** la deuxième section comprend en outre un filtre à tambour rotatif (SGR101) approprié pour séparer les particules organiques > 0,25 mm de l'eau usée provenant de la première section de lavage et de tamisage ;
une unité de réaction (VS102) raccordée par le biais d'une conduite audit filtre à tambour rotatif (SGR101) pour recevoir l'eau filtrée à partir de celui-ci, et comprenant un premier réacteur de coagulation doté d'un agitateur (AG107) et un deuxième réacteur pour la précipitation des métaux, également doté d'un agitateur (AG108) ainsi que d'un pH-mètre (PHT102) ;
un filoculateur (FL101), prévu avec un agitateur (AG109) raccordé par le biais d'une conduite à ladite unité de réaction (VS102) pour recevoir l'eau usée traitée dans ce dernier ;
un sédimètre (S101) raccordé par le biais d'une conduite audit floculateur (FL101) pour la séparation de l'eau de la boue, afin de recevoir l'eau usée de ce dernier ;
une pompe (P112) appliquée au fond dudit sédimètre (S101) pour l'extraction de ladite boue ;
un réservoir (TK101) stockant une solution d'hydroxyde de sodium ou d'hydroxyde de calcium, alimenté au moyen d'une pompe (P102) au réacteur de précipitation de métaux de ladite unité de réaction (VS102) ;
un réservoir (TK104) stockant une solution de chlorure de fer ou d'un autre coagulant inorganique, alimenté au moyen d'une pompe (P105) au réacteur de coagulation de l'unité de réaction (VS102) ; et
une source d'une solution de floculant, alimentée au moyen d'une pompe (P108) au floculateur (FL101).

4. Installation selon l'une quelconque des revendications précédentes, **caractérisée en ce que** le floculateur (FL101) est agencé à l'intérieur du sédimètre (S101).

5. Installation selon la revendication 3 ou 4, **caractérisée en ce que** la source de solution de floculant se compose d'une station automatique (CP101) pour la préparation d'une solution de polyélectrolyte.

6. Installation selon l'une quelconque des revendications précédentes, **caractérisée en ce que** la deuxième section comprend en outre au moins l'un des éléments suivants :
un ensemble de buses hydrauliques à suppression de mousse (UG101) agencées au-dessus du réacteur de coagulation de l'unité de réaction (VS102);
un pH-mètre (PHT101) agencé dans le réacteur de coagulation de l'unité de réaction (VS102) ;
un dispositif d'écumage (SK101), agencé au niveau de la partie supérieure de la paroi de division entre le réacteur de coagulation et le réacteur de précipitation de métaux de l'unité de réaction (VS102), approprié pour supprimer la mousse et les substances flottantes et raccordé à une pompe (P114) en communication avec une conduite de distribution de la pompe (P112) appliquée au fond du sédimètre (S101) ;
une pompe (P109) pour envoyer l'eau usée traitée qui quitte l'unité de réaction (VS102) jusqu'au floculateur (FL101) ;
un débitmètre (FQ101) agencé sur la conduite de raccordement entre l'unité de réaction (VS102) et le floculateur (FL101) ;
un débitmètre (FQ105) agencé sur la conduite de distribution de la pompe (P112) appliqué au fond du sédimètre (S101) ;
un réservoir (TK103) stockant un coagulant organique, alimenté au moyen d'une pompe (P104) jusqu'au réacteur de coagulation de l'unité de réaction (VS102) ;
un réservoir (TK105) stockant un agent de précipitation du métal, alimenté au moyen d'une pompe (P106) au réacteur de précipitation de métaux de l'unité de réaction (VS102).

7. Installation selon l'une quelconque des revendications précédentes, **caractérisée en ce que** la première section de lavage et de tamisage comprend :
une trémie de chargement (T101) avec une courroie qui s'y rapporte (N101) pour l'extraction des déchets à partir de ladite trémie (T101) ;
un dispositif d'alimentation de courroie (N102) pour transporter le matériau dudit extracteur de courroie (N101) jusqu'à l'unité de lavage et de tamisage ;
un séparateur magnétique (N103) agencé au-dessus dudit dispositif d'alimentation de courroie (N102) ;
une unité de lavage et de tamisage pour recevoir les matériaux dudit dispositif d'alimentation de courroie (N102) ;
un tamis vibrant (V101) prévu avec des buses, approprié pour laver et séparer la partie organique légère ;
un compacteur à vis (CCL102) pour la déshydratation de ladite partie organique lavée et séparée ;
un réservoir de collecte (VS101) pour l'eau usée provenant dudit tamis vibrant (V101) et éventuellement de ladite unité de lavage et de tamisage et dudit compacteur à vis (CCL102) ;
un réservoir de régulation (VC101) raccordé audit réservoir de collecte (VS101) et approprié, en combinaison avec une valve de flotteur (VG101), pour maintenir un niveau minimum dans le réservoir de collecte (VS101), suffisant pour le fonctionnement d'une pompe (P101) afin d'aspirer l'eau usée ;
une pompe (P101) agencée sur une conduite s'étendant entre ledit réservoir de collecte (VS101) et un hydrocyclone (C101) approprié pour séparer les parties sableuses de l'eau usée contenant de la vase, une conduite s'étendant entre la buse supérieure dudit hydrocyclone (C101) et ledit réservoir de régulation (VC101) pour alimenter l'eau du premier au dernier ;
un séparateur à spirales (SSP101) prévu au niveau de l'extrémité supérieure avec un réservoir de chargement (VCS101) pour la répartition de l'alimentation sur les différentes spirales desdites parties sableuses quittant la partie inférieure de l'hydrocyclone (C101) ;
un tuyau pour alimenter l'eau du réseau audit réservoir de chargement (VCS101) ;
un premier séchoir vibrant (V102) agencé au-dessus du réservoir de collecte (VS101), approprié pour sécher un mélange de particules d'eau/organique provenant dudit séparateur à spirales (SSP101) ; et
un deuxième séchoir vibrant (V103) agencé au-dessus du réservoir de collecte (VS101), approprié pour sécher un mélange d'eau/sable provenant du séparateur à spirales (SSP101) et éventuellement de l'unité de lavage et de tamisage.

8. Installation selon la revendication précédente, **caractérisée en ce que** l'unité de lavage et de tamisage se compose d'un laveur à tambour (LBT101) composé d'un tambour de lavage à contre-courant au niveau de la sortie duquel on forme trois zones de tamisage au moyen de trois tamis concentriques tronconiques raccordés au tambour de lavage par des brides et des vis, en plus d'une zone inférieure pour le retrait de la partie inerte et un déversoir de tête pour l'écoulement sortant de l'eau usée contenant la partie organique, le sable fin et la vase.

9. Installation selon la revendication précédente, **caractérisée en ce que** les trois tamis tronconiques du laveur à tambour (LBT101) ont des surfaces de tamisage avec des ouvertures de 2,5 mm, 8 mm et 30 mm de diamètre respectivement.

10. Installation selon l'une quelconque des revendications précédentes, **caractérisée en ce que** la première section de lavage et de tamisage comprend en outre au moins un élément parmi les éléments suivants :
un tamis (GR101) approprié pour séparer des matériaux ≥120 mm, agencé au-dessus de la trémie de chargement (T101) ;
une vis transversale (CCL101) agencée à la sortie de la trémie de chargement (T101) ;
une courroie transporteuse (N104) pour transporter vers un récipient de stockage approprié, le granulé avec une taille de 2-8 mm qui quitte l'unité de lavage et de tamisage ;
un séparateur magnétique (N105) agencé au-dessus de ladite courroie transporteuse (N104) pour le granulé ;
une courroie transporteuse (N106) pour transporter jusqu'à un conteneur de stockage approprié, le gravier d'une taille de 8-30 mm qui quitte l'unité de lavage et de tamisage ;
un séparateur magnétique (N107) agencé au-dessus de ladite courroie transporteuse (N106) pour le gravier ;
un séparateur de courroie à courant de Foucault (N108) agencé au-dessus de ladite courroie transporteuse (N106) pour le gravier ;
un ou plusieurs agitateurs (AG104, AG105) agencés dans le réservoir de collecte d'eau usée (VS101) ;
une cellule de friction (CLA101) agencée entre l'hydrocyclone (C101) et le séparateur à spirales (SSP101) et dotée d'une pluralité d'agitateurs (AG101, AG102, AG103) ;
une courroie transporteuse (N110) pour transporter jusqu'à un conteneur de stockage approprié la partie organique < 2 mm qui quitte le premier séchoir vibrant (V102) ;
une courroie transporteuse (N109) pour transporter jusqu'à un conteneur de stockage approprié le sable qui quitte le deuxième séchoir vibrant (V103) ; et
un débitmètre (FQ106) agencé sur le tuyau d'alimentation d'eau du réseau jusqu'au réservoir de chargement (VCS101).

11. Installation selon l'une quelconque des revendications précédentes, **caractérisée en ce que** la troisième section pour la déshydratation mécanique de la boue comprend :
un réservoir de stockage de boue (TK107) raccordé à la conduite de distribution de la pompe (P112) appliquée au fond du sédimètre (S101) ;
une pompe (P113) agencée au fond dudit réservoir de stockage de boue (TK107) pour l'extraction de ladite boue ;
une presse à filtre (FP101) pouvant déshydrater mécaniquement la boue, alimentée par ladite pompe (P113) du réservoir de stockage de boue (TK107).

12. Installation selon l'une quelconque des revendications précédentes, **caractérisée en ce que** la quatrième section pour le stockage et la recirculation de l'eau collectée dans l'installation comprend :
un réservoir de stockage (VS103) pour l'eau séparée de la boue dans les deuxième et troisième sections de l'installation ;
un puits d'évacuation (PZ101) pour collecter l'eau provenant des orifices de trop-plein des éléments des trois premières sections de l'installation, un drain inférieur dudit réservoir de stockage (VS103) réalise l'étanchéité dans toute l'installation, des gouttières de collecte de la boue aqueuse et d'autres utilisateurs ;
une première pompe (P110) pour aspirer l'eau du réservoir de stockage (VS103) afin d'alimenter l'unité de lavage et de tamisage au niveau de l'embouchure d'entrée de déchets ;
une deuxième pompe (P111) pour aspirer l'eau provenant du réservoir de stockage (VS103) pour alimenter l'unité de lavage et de tamisage à contre-courant, ainsi que les autres utilisateurs de la première section de l'installation qui nécessite de l'eau propre ;
une troisième pompe (P115) pour aspirer l'eau provenant dudit puits d'évacuation (PZ101) pour alimenter l'unité de lavage et de tamisage au niveau de la bouche d'entrée de déchets ; et
un tuyau pour décharger le système d'égout et l'orifice de trop-plein du réservoir de stockage (VS103).

13. Installation selon la revendication précédente, **caractérisée en ce que** la troisième pompe (P115) est raccordée de manière opérationnelle à la première pompe (P110) afin de fonctionner en alternance avec cette dernière, lesdites pompes (P110, P115) ayant le même débit sortant.

14. Installation selon l'une quelconque des revendications précédentes, **caractérisée en ce que** la quatrième section pour le stockage et la recirculation de l'eau comprend en outre au moins l'un des éléments suivants :
un débitmètre (FQ102) agencé sur ledit tuyau de décharge de l'orifice de trop-plein du réservoir de stockage (VS103) ;
un débitmètre (FQ103) agencé sur la conduite de distribution de la première pompe (P110) ;
un débitmètre (FQ104) agencé sur la conduite de distribution de la deuxième pompe (P111).

15. Procédé pour recycler des balayures, des déchets provenant des épurateurs d'eau, des excavations, des assainissements et similaires comprenant les étapes suivantes consistant à :
a) séparer et récupérer les métaux ferreux contenus dans le matériau ;
b) laver et tamiser le matériau avec la séparation de la partie organique de la partie inerte ;
c) diviser ladite partie inerte en fonction de la taille du grain ;
d) compacter ladite partie organique légère ;
e) collecter l'eau usée provenant desdites opérations de lavage et de tamisage ;
f) séparer la partie organique < 2 mm et le sable provenant de ladite eau usée ;
g) séparer les particules organiques > 0,25 mm de ladite eau usée ;
h) traiter de manière physicochimique l'eau usée avec des réactifs pour le retrait des substances polluantes ;
i) floculer l'eau usée au moyen d'une solution de floculation ;
j) procéder à la sédimentation de l'eau usée ainsi traitée, avec la séparation de la boue de traitement physicochimique provenant de l'eau surnageante ;
k) collecter l'eau surnageante provenant de ladite sédimentation ;
l) déshydrater la boue provenant de ladite sédimentation ;
m) collecter l'eau provenant de ladite déshydratation ;
n) collecter l'eau provenant des orifices de trop-plein, laver les joints d'étanchéité, la boue aqueuse, l'eau de lavage des sols, etc. ; et
o) réutiliser l'eau collectée auxdites étapes de collecte k), m) et n) pour l'étape de lavage et de tamisage de matériau b),
**caractérisé en ce qu'**à la dernière étape o), on ajoute une solution d'hypochlorite de sodium à l'eau réutilisée pour l'étape de lavage et de tamisage de matériau b).

16. Procédé selon la revendication précédente, **caractérisé en ce que** la solution d'hypochlorite de sodium est une solution à 11 % de chlore actif.

17. Procédé selon la revendication 15 ou 16, **caractérisé en ce qu'**il comprend en outre une étape b') consistant à introduire une solution d'hyposulfite de sodium tout en procédant au lavage et au tamisage pendant l'étape b).

18. Procédé selon la revendication précédente, **caractérisé en ce qu'**il comprend en outre au moins l'une des étapes suivantes :
a') tamiser de manière grossière le matériau avant l'étape a) ;
c') séparer et récupérer les métaux ferreux et non ferreux pendant l'étape c) ;
f') laver et décontaminer les particules de sable par épuration dans une cellule de friction pendant l'étape f) ;
h') traiter de manière physicochimique l'eau usée avec un réactif pour la coagulation des substances organiques et éventuellement un autre réactif pour la précipitation des métaux pendant l'étape h) ; et
i') préparer et alimenter une solution de polyélectrolyte de floculation avant l'étape i).
